Europäisches Patentamt

European Patent Office

Office européen des brevets

(19)

(11) **EP 1 585 305 A2**

(12) **EUROPEAN PATENT APPLICATION**

(43) Date of publication:
   **12.10.2005 Bulletin 2005/41**

(51) Int Cl.⁷: **H04N 1/00**

(21) Application number: **05102258.0**

(22) Date of filing: **22.03.2005**

(84) Designated Contracting States:
   **AT BE BG CH CY CZ DE DK EE ES FI FR GB GR
   HU IE IS IT LI LT LU MC NL PL PT RO SE SI SK TR**
   Designated Extension States:
   **AL BA HR LV MK YU**

(30) Priority: **31.03.2004 JP 2004103702**

(71) Applicant: **Konica Minolta Medical & Graphic, Inc.
   Tokyo 163-0512 (JP)**

(72) Inventor: **Hoshino, Toru
   Konica Minolta Medical&Graphic, Inc.
   192-8505, Tokyo (JP)**

(74) Representative: **Henkel, Feiler & Hänzel
   Möhlstrasse 37
   81675 München (DE)**

(54) **Color estimating method, color adjusting method, and color image forming apparatus**

(57)   A color estimating method for estimating a color obtained by printing a first coloring material including a first pigment on a recording medium and by overprinting a second coloring material including a second pigment on top of the first coloring material, including the steps of: measuring a spectral density SD1 ($\lambda$) of the first coloring material printed on the recording medium; measuring a spectral density SD2 ($\lambda$) of the second coloring material printed on the recording medium; measuring a spectral density SDW1 ($\lambda$) of the recording medium; calculating with using the spectral density SD1 ($\lambda$) adjusted with a transparency of the second coloring material, a spectral density SD2 ($\lambda$) adjusted with a trapping state on the first coloring material, and the spectral density SDW1 ($\lambda$); and estimating a spectral density SDM12 ($\lambda$) of the color to be obtained with using a result of the calculating step.

EP 1 585 305 A2

## Description

This application is based on Japanese Patent Application No. 2004-103702 filed on March 31, 2004 in Japanese Patent Office, the entire content of which is hereby incorporated by reference.

## BACKGROUND OF THE INVENTION

This invention relates to a color estimating method for estimating the color obtained by performing overprinting plural fundamental coloring materials, a color adjusting method which uses the color estimating method, and a color image forming apparatus which uses the color adjusting method.

In recent years, DTP (Desk Top Publishing) and the like have been becoming more popular and as a result image editing on computer software of images that have been inputted from a scanner and page adding operations are becoming standard, and full digital editing is no longer rare.

In this type of processing, image setter output in which image data which has been subjected to page editing is directly output to film or CTP (computer to plate) output in which image recording is performed directly on the printing plate; and CTC (computer to cylinder) output in which image recording is performed directly on the printing plate which is wound onto the cylinder of the printer are being performed with the object of improving efficiency.

Furthermore, proofs are created and used in 3 main applications in the proofing processes in these types of printing processes. These are (1) error checking at the operation site, or in other words, internal correction; (2) external corrections which are submitted for checking of completed work by the designer or the order holder; (3) print samples that are submitted to the person in charge of printing as a sample of final print material.

When a color print was created in this manner, proof material (color proof) was created by using the halftone dot original films which are separated into Y (yellow), M (magenta), C (Cyan) and BK (black) plates by performing color correction at the original film stage. Before the actual printing plate is created, checks are done to determine if there are errors in the document layout, in color or in text, and the final form of the printed material is thereby checked beforehand.

In this case, there was the problem that some film output and printing plate output must be performed just for proof checking, and when proofing is done by print proofs and other proof material, film and print plates are wasted and many unnecessary operations must be performed.

As a result, in performing full digital image creation and editing by a computer in this manner, there is demand for systems which perform direct color image output called DDCP (Direct Digital Color Proof) or DCP (Digital Color Proof).

In this type of DDCP, prior to recording from the digital image data processed on the computer onto the plate making film using an image setter or the like, or performing final printing operations for creating a direct printing plate using CTP, or performing direct image recording on the printing plate that is wound onto the cylinder of the printer by CTC, a color full proof which reproduces output showing the digital image that was processed by the computer is created, and the picture pattern, tone and the text and the like are checked.

Another example of a apparatus for creating a color proof is a color proof creation apparatus in which light spots comprising a plurality of lights with different wavelengths such as R, G and B are exposed on a silver salt color photosensitive material based on halftone dot image data for each of the color separated halftone dot originals. By performing color development for dots of each of the 3 fundamental colors Y, M and C, halftone dot images are reproduced and a color proof is created. Another example is a type of DDCP in which output intensity for 3 fundamental colors are changed for each of a 1 order color, a multiple-order color and white in such a way that the 1 order color (plain color of the ink) of the printing machine; multiple-order colors obtained from overprinting ink (color obtained by overprinting ink); and the ground color of the printing paper are reproduced, and the colors are thereby adjusted and output (described in Patent Document 1, for eample).

However, in order to perform the above-described adjustment method, the 1-order color and the multiple-order colors are output at the printing machine and the color system values for these colors and the ground color of the printing paper (for example L*a*b* color system values) must be determined. If the inks used at the printing machine are the 4 colors Y (yellow), M (magenta), C (cyan) and K (black), a total of 16 colors are measured and output and these include 4 1-order colors (plain color ink), 6 2-order colors (2 color overprinting), 4 3-order colors (3 color overprinting), and 1 4-order color (4 color overprinting). Furthermore in the case where spot color is used, measurement is also done for 16 additional colors in which the spot color is superposed on each of the 16 colors.

However, the same color is not always used as the spot color, and a different color is used as the spot color for each type of printing material. Thus measurement must be done for all of the 16 colors in which the spot color is superposed and this is very time consuming and requires much effort.

As a result, the color system value for the color obtained by overprinting the inks including pigments are estimated from the color characteristic values of the colors which will be at the lower side and the upper side. For example a color estimating method (Patent Application No. 2003-055365) in which the color which will be at the lower side and the color which will be at the upper side are estimated from the spectral density is proposed by the applicant of this invention.

[Patent Document 1] Japanese Patent Application Laid-Open publication No. 2003-149796 publication (paragraphs [0119]-[0168] and Figs. 3-5)

However, in the color estimating method described above, because the difference in state of the ink which will be at the lower side is not taken into consideration, for some inks the difference (color difference) between the color system value obtained by estimation and the color system value actually obtained exceeds the permissible amount and there is a need for the accuracy of the estimation to be improved.

## SUMMARY OF THE INVENTION

This invention was conceived in view of the above-described situation and an object thereof is to provide: a color estimating method in which color can be accurately estimated by adjusting the color obtained by overprinting by adjusting the value of color characteristics of the ink that will be on the upper side in accordance with the ink on the lower side; a color adjusting method for reproducing the color estimated using the estimating method; and a color image forming apparatus which uses the color adjusting method.

One aspect of the color estimating method for achieving the above object is a color estimating method for estimating a color to be obtained by printing a first coloring material including a first pigment on a recording medium and by overprinting a second coloring material including a second pigment on top of the first coloring material printed on the recording medium, the color estimating method including the steps of: measuring a spectral density SD1 $(\lambda)$ for each wavelength of light from the first coloring material printed on the recording medium; measuring a spectral density SD2 $(\lambda)$ for each wavelength of light from the second coloring material printed on the recording medium; measuring a spectral density SDW1 $(\lambda)$ for each wavelength of light from the recording medium; calculating with using the spectral density SD1 $(\lambda)$ adjusted with a numeric value indicating transparency of the second coloring material, a spectral density SD2 $(\lambda)$ adjusted with a numeric value indicating a trapping state of another coloring material on the first coloring material, and with using the spectral density SDW1 $(\lambda)$; and estimating a spectral density SDM12 $(\lambda)$ of the color obtained by overprinting the second coloring material on the first coloring material printed on the recording medium with using a result of the calculating step.

## BRIEF DESCRIPTION OF THE DRAWINGS

Fig. 1 is a functional block drawing, which shows the structure of the color proof creation apparatus of this invention.

Fig. 2 is an explanatory drawing, which shows an example of the structure of the color characteristics table of this embodiment.

Fig. 3 is an explanatory drawing, which shows an example of the structure of the coefficient table of this embodiment.

Fig. 4 is an explanatory drawing, which shows an example of the structure of the color table of this embodiment.

Fig. 5 is an explanatory drawing, which shows an example of the structure of the color channel table of this embodiment.

Fig. 6 is a flowchart, which shows the steps of the color estimating method of this invention.

Fig. 7 is a flowchart showing the processing steps in the color proof creation apparatus, which uses the color estimating method of this invention.

Fig. 8 shows the results of measuring the spectral reflectance RW $(\lambda)$ of the ground color of the printing paper, spectral reflectance R1 $(\lambda)$ of magenta, and the spectral reflectance R2 $(\lambda)$ of the spot color (red) and the spectral reflectance RT12 $(\lambda)$ of the actual overprinted color of the magenta and the spot color.

Fig. 9 shows the spectral density of the SD1 $(\lambda)$ of magenta (M), the spectral density of the SD2 $(\lambda)$ of the spot color (red), the spectral density SDM12 $(\lambda)$ obtained using the trapping ratio coefficient set for magenta, the spectral density SDT12 $(\lambda)$ based on actual measurements, and the spectral density SDM'12 $(\lambda)$ obtained using the trapping ratio coefficient set for yellow instead of the trapping ratio coefficient set for the magenta, and the spectral density SDT12 $(\lambda)$ of the actual over print color of the magenta and the spot color.

Fig. 10 is a graph showing the spectral density of the SD1 $(\lambda)$ of magenta (M), the spectral density of the SD2 $(\lambda)$ of the spot color (red), the spectral density SDM12 $(\lambda)$ obtained using the trapping ratio coefficient set for magenta, the spectral density SDT12 $(\lambda)$ based on actual measurements, and the spectral density SDM'12 $(\lambda)$ obtained using the trapping ratio coefficient set for yellow.

## DETAILED DESCRIPTION OF THE INVENTION

The present invention prints (including printing in which inks are overprinted) plural inks (coloring materials) on printing paper as the recording medium, and estimates the color obtained by performing printing by overprinting the printed inks based on the color characteristic values obtained by measuring the printed portion. This invention is favorably used particularly when the ink includes pigments.

In addition, a method is also described in which the transmittance density (called spectral density hereinafter) for light of each of the wavelengths $\lambda$ is used as the value for the color characteristics which is measured and used in the estimating method.

The spectral density herein is obtained by changing the wavelengths by 10 nm intervals between 380 nm and 730 nm for example, and measuring the reflectance R and then converting the reflectance R to density using the formula -0.5 x Log 10 (R).

In addition, as shown below, the L*a*b* color system value is one color system value which shows color, and it shows color using the three-dimensional space including the L* axis, the a* axis, and the b* axis, and hue and chroma are shown by the a*b* plane, and L* shows a color characteristic of lightness in the plane perpendicular to the a*b* plane. Also, the L*a*b* color system values are equivalent to the sensitivity of the human eye, and is based on the XYZ color system values obtained by accumulating light quantity using the x-bar, y-bar, and z-bar spectral characteristics (specific spectral characteristics) which are determined by the CIE (Commission Internationale de l'Eclairage: International Commission on Illumination).

In the following, an embodiment to be used in a color proof creation apparatus (color image forming apparatus) is described in details with reference to the drawings as an example for describing the color estimating method and color adjusting method of this invention.

(Control Structure for a Color Proof Creation Apparatus)

First, in the color proof creation apparatus of this embodiment, the target color is the color of a halftone dot printing area obtained by overprinting each of the halftone dot images for plural inks (C (cyan), M (magenta), Y (yellow) K (black) and spot color) at the printing machine. The target color is reproduced by changing the output intensities of plural fundamental colors (such as Y, M, C in this embodiment and the order and the like may be changed and written as "C, M, Y", "Y M C" or "CMY" hereinafter) in the color proof creation apparatus while outputting color images, and the color adjustment method of this invention is favorably used in this apparatus.

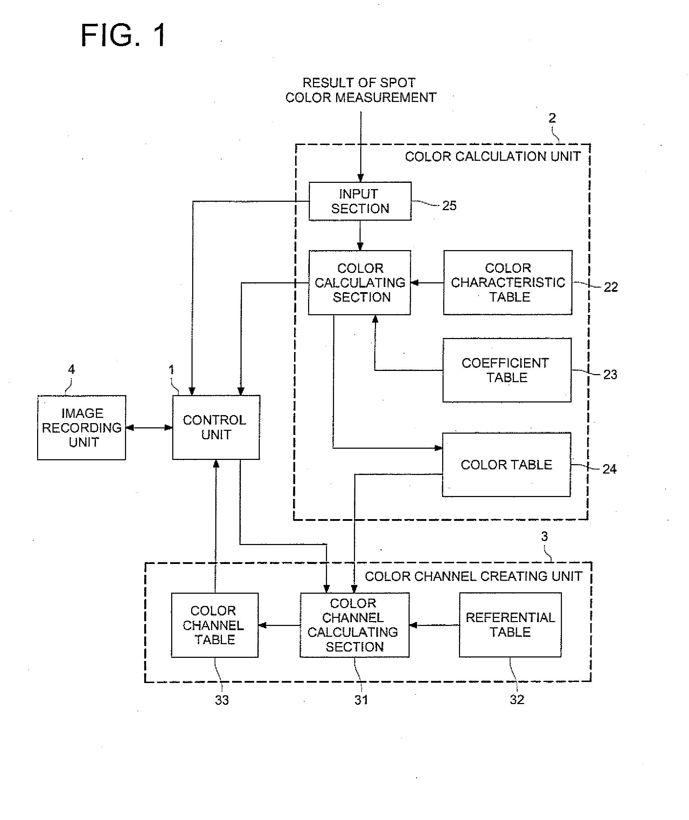

Fig. 1 shows a functional block drawing of a color proof creation apparatus. As shown in Fig. 1, the color proof creation apparatus of this embodiment comprises a control unit 1, a color channel calculation unit 2, a color channel creating unit 3, and an image recording unit 4. Each of the parts will be described in detail in the following.

The color calculating unit 2 comprises a color calculating section 21, a color characteristics table 22, a coefficient table 23 (numeric value table), a color table 24 and an input section 25.

The 1-order colors, the 2-order colors, the 3-order colors, and the 4-order colors (sometimes written together as CMYK1/2/3/4 order colors) which are printed using ink of each of the colors C, M, Y, K on print paper, for example, at the printing machine, and the spectral densities for the ground color for the printing paper are stored beforehand in the color characteristics table 22.

The CMYK1/2/3/4 order colors will be described here. 1 order color refers to a 1 color from CMYK; a 2 order color is a color in which 2 colors of the CMYK ink are combined; a 3 order color is a color in which 3 colors of the CMYK ink are combined; and a 4 order color is a color in which 4 colors of the CMYK ink are combined. The 1 order colors are C, M, Y, and K; the 2 order colors are R (M+Y), G (C+Y), B (C+M), K+C, K+M, and K+Y; the 3 order colors are C+M+Y, KR (K+M+Y), KG (K+C+Y), KB (K+C+M); the 4 order color is C+M+Y+K and thus there is a total of 15 colors.

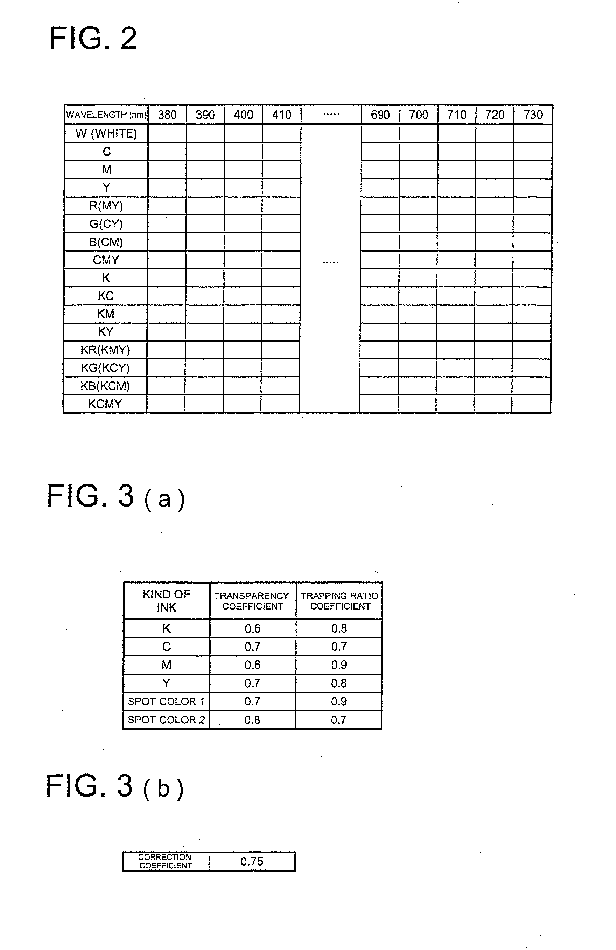

Fig. 2 shows the structure of the color characteristics table 22. As shown in Fig. 2, the color characteristics table comprises each of the above colors and the spectral densities for the ground colors of the printing paper, but the values for each have been omitted.

The coefficient table 23 is a storage section and stores the transparency coefficient a (a numeric value indicating the transparency) and the trapping ratio coefficient b (a numeric value indicating trapping state) for each ink in a configuration such as that shown in Fig. 3(a) and the correcting coefficient c as shown in Fig. 3 (b). The transparency coefficient a is a numeric value which shows the transparency of ink, and in the case where the spot color is overprinted, it is the coefficient for correcting the spectral density of the color which will be at the lower side. The trapping ratio coefficient b is a numeric value which indicates whether another ink is easily trapped, or in other words it is a numeric value that indicates the trapping state of the ink on another ink and is a coefficient for correcting the spectral density of the color which will be at the upper side. The correction coefficient c is a coefficient for correction included in the equation used for color estimation which is described hereinafter.

If the ink is completely transparent, the transparency coefficient a is 1, while if it completely opaque, the transparency coefficient a is 0, and thus transparency coefficient a is a fixed numeric value that is between 0 and 1. Given that the trapping ratio coefficient b for a printing paper is 1, when compared to general printing paper, trapping of the ink on another ink is less, and thus the trapping ratio coefficient b is a fixed numeric value between 0 and 1 and varies in accordance with the ink.

The input section 25 is for specifying the ink (C, M, Y, K and spot color) and for specifying printing paper and inputting instructions for color proof creation. The spot color table 22 is for inputting the above colors and the spectral densities and the coefficient table 23 is for inputting the coefficients. The input section 25 may also be a reading device in which an interface for connecting a measuring device, a floppy (registered trademark disk) in which the results of measuring spectral densities and the coefficients are input may be installed so as to be removable.

The color characteristics table 22 and the coefficient table 23 may be included from the start on a HDD (hard disk drive) which is installed inside the color proof creation apparatus.

The color channel calculating section 21 functions as: the extraction section of the invention for extracting the coefficients from the coefficient table 23; the calculating section of this invention for calculating and determining the spectral densities of the colors obtained by performing printing by overprinting, from the spectral densities stored in the color characteristics table 22; the color conversion section of this invention for converting the spectral density to the L*a*b* color system value, for storing the obtained L*a*b* color system value in the color table 24. The following is a detailed description of the calculation method.

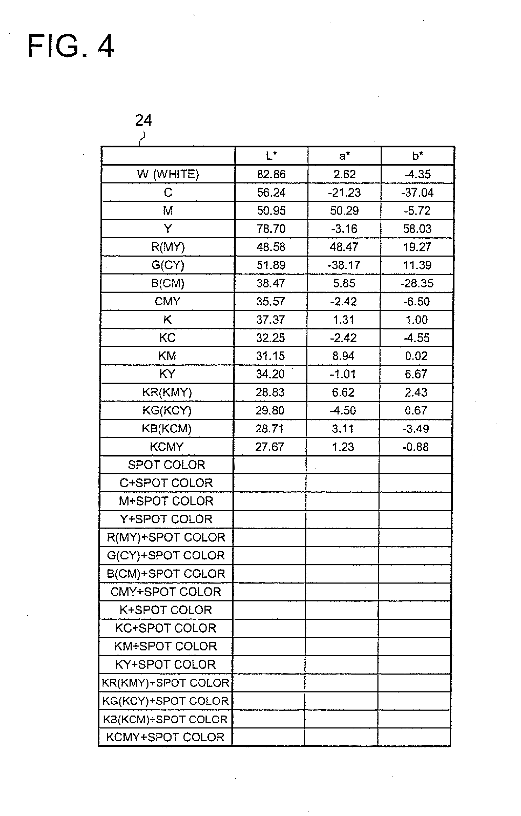

The color table 24 stores the L*a*b* color system values for the CMYK1/2/3/4 order colors, the colors obtained when the spot colors are overprinted on the CMYK1/2/3/4 order colors, and the ground colors of the printing paper as shown in Fig. 4. Fig. 4 shows an example of the L*a*b* color system values for the CMYK1/2/3/4 order colors and the ground color of the printing paper (shown as W (white) in the drawing), and the value for the spot colors are changed by the spot color and thus these values are not shown.

The color channel creating unit 3 comprises the color channel calculating section 31, the referential table 31, and the color channel table 32.

The referential table 32 stores the L*a*b* → CMY LUT which defines the relationship between the output intensity combinations for each of the fundamental colors corresponding to the L*a*b* color system values as the output characteristics in the image recording section 4. As described by the applicant for this invention in the specification of Patent Application No. 2003-064629, the L*a*b* → CMY LUT can be determined by outputting a color chart which has plural color images for which the output intensities for C, M and Y of the image recording section 4 (described hereinafter) are equally divided between the minimum value of 0 and the maximum value and for each of the outputs are combined; measuring the L*a*b* color system value for plural color images; creating the CMY → L*a*b* LUT from the output intensity combinations for C, M, and Y and the L*a*b* color system values at that time; and obtaining the output intensity combinations of CMY corresponding to each of the combinations in which L* (0~100), a*(-127~128), b*(-127~128) are evenly divided using the CMY → L*a*b* LUT by convergence calculation processing.

The color channel calculating section 31 functions as the creation section of this invention for creating the color channel based on the L*a*b* color system values stored in the color table 24 and the L*a*b* → CMY LUT stored in the referential table 32. For example, as described in the specification of Patent Application No. 2003-064629 submitted by the applicants of this invention, at L*a*b* which is the L*a*b* → CMY LUT input point, the C, M, Y output intensity combinations for the stored L*a*b* color system values can be determined from the C, M and Y output intensities for the 8 points including 2 L* points (Ll and L2), 2 a* points (a1 and a2), 2 b* points (bl and b2) which are close to each of the values of L*a*b* of the L*a*b* color system that is stored in the color table 24 and the distance of each of the input points for the L*a*b* values of the L*a*b* color system.

Furthermore in this embodiment, the referential table 32 is one which stores the L*a*b* → CMY LUT, but the referential table 32 may also store the CMY → L*a*b* LUT which defines the relationship between the L*a*b* color system values corresponding to the output intensity combinations for each of the fundamental colors. In that case, when the CMY output intensity combinations for outputting the L*a*b* color system values are to be determined, it is sufficient to determine the L*a*b* → CMY LUT from the CMY → L*a*b* LUT. Thus, the "referential table" of this invention can be any one which shows the relationship between the output intensities for plural fundamental colors and the values of the L*a*b* color system such as the L*a*b* → CMY LUT or the CMY → L*a*b* LUT.

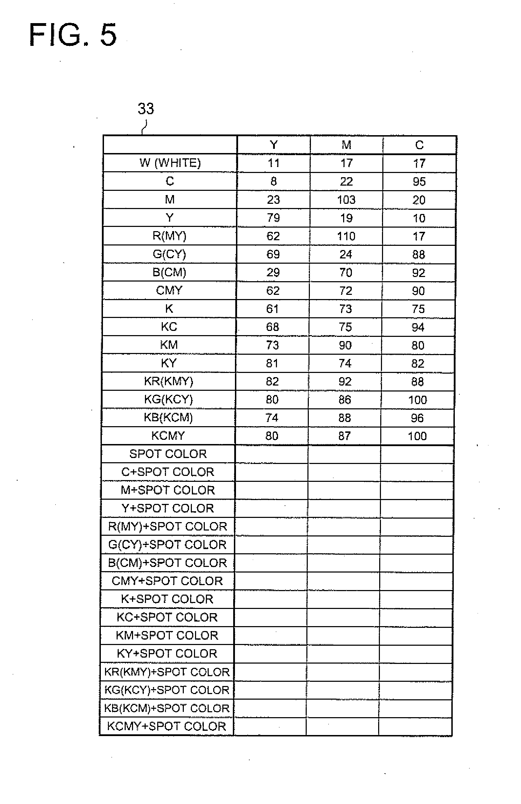

The color channel table 33 stores the CMYK1/2/3/4 order colors and the CMY output intensity combinations at the image recording section 4 which correspond to the color obtained by overprinting the spot color on each of the CMYK1/2/3/4 order colors and ground color of the printing paper in the configuration shown in Fig. 5. In addition, Fig. 5 shows an example in which the output intensity combinations for the CMYK1/2/3/4 order colors and the white ground (shown as W (white) in the drawing) are shown with output intensity for Y ranging from a minimum value of 0 to a maximum value of 140, and the output intensity for M and C ranging from a minimum value of 0 to a maximum value of 160. The values for the spot colors vary in accordance with the type of the spot color and so these values have been omitted.

The image recording section 4 exposes the magenta color development layer (M layer) of the photosensitive material using red (R) light; exposes the cyan color development layer (C layer) of the photosensitive material using green (G) light; and exposes the yellow color development layer (Y layer) of the photosensitive material using blue (B) light; and thereby performs the development process. Y, M and C which are fundamental colors are made visible and output and the color image is thereby formed. The exposure to light using red (R) light, the green (G) light, the blue (B) light, is performed on each pixel in point order by irradiating these colors simultaneously.

A function of the control unit 1 is to control each section and it also functions as the control section of this invention, and a determination is made from the image data as to whether the color to be output by each pixel at the image storage section 4 is a CMYK1/2/3/4 multiple-order color or a color obtained by overprinting a spot color on a CMYK1/2/3/4 order color, or a ground colors of the printing paper, based on the halftone dot image data that is separated for each ink of the C, M, Y, K and the CMY output intensities combination is determined by referring to the color channel table 33; and the Y, M, C output intensity data that is obtained from the color channel table 33 is converted to B, R, G exposure output intensity data such that the output intensities of Y, M, C which are the fundamental colors are changed and output at the image recording section 4. Control is thus performed such that the light intensity for each color of the image recording section 6 is changed. The control unit 1 comprises a CPU (not shown) for realizing these functions, and a system memory (not shown) for storing a program for performing overall control, a program for changing Y, M, and C output intensities and various data that is needed when the programs are executed, and which comprises a work area for executing the programs.

In this manner, the color proof creation apparatus reproduces colors created by overprinting the halftone dot images for each of the C, M, Y and K and spot color inks at the printing machine by changing the output intensity for the fundamental colors Y, M and C, and thereby creates a color proof.

(Color Estimating Method)

The color estimating method of this invention will be described next. In order to make the description easily understandable, each of the steps of the estimating method will be described and then an example will be given in which a color adjusting method including the color estimating method is applied to a color proof creation apparatus.

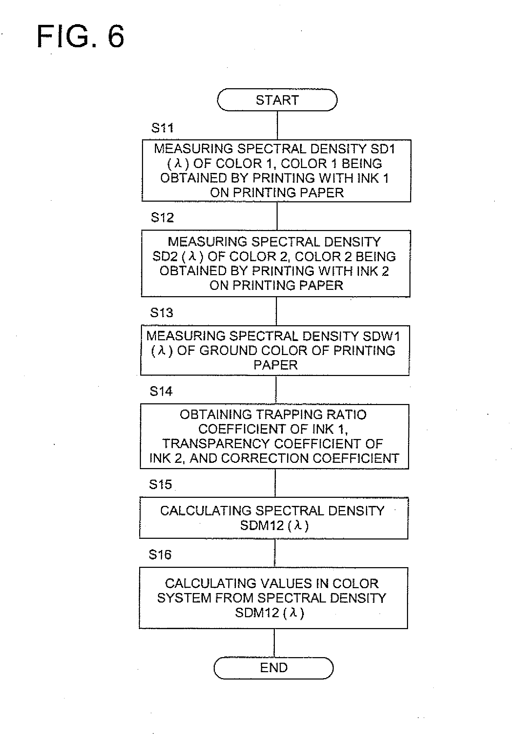

Fig. 6 is a flowchart showing the steps of the color estimating method of this invention, and the color estimating method of this embodiment is described using Fig. 6. As is the case with the other steps, in Fig. 6 for example, Step S11 is simply described as S11.

(S11)

First, the ink which will be at the lower side (first coloring material) (referred to as ink 1 hereinafter) is printed on printing paper (recording medium), and the spectral density of the color of ink 1 (referred to as color 1 hereinafter) is measured. The spectral density of color 1 is SD1 $(\lambda)$, and color 1 is any one of the CMYK1/2/3/4 order colors printed using ink of the above-described colors C, M, Y and K. Furthermore, the spectral density is obtained measuring the reflectance in the same wavelengths as above, and converting the reflectance. The spectral density measurements which are done below are also done in this manner.

(S12)

Next, the ink which will be at the upper side (second coloring material) (referred to as ink 2 hereinafter) is printed on printing paper (recording medium), and the spectral density of the color of the printed ink (referred to as color 2 hereinafter) is measured. The spectral density of color 2 is SD2 $(\lambda)$. Ink 2 is ink printed using spot color ink described above.

(S13)

The spectral density of the ground color of the printing paper (referred to as color W1 hereinafter) is measured. The spectral density of color W1 is SDW1 $(\lambda)$.

(S14)

The set trapping ratio coefficient b1 for ink 1, the set transparency ratio coefficient a2 for ink 2 and the correction coefficient are obtained. However, if ink 1 is formed by overprinting plural inks, the set trapping ratio coefficient is that for the uppermost ink.

(S15)

The color obtained by overprinting ink 2 on ink 1 on the printing paper (color M12 hereinafter) is estimated. The spectral density of color M12 is SDM12 $(\lambda)$, and SDM12 $(\lambda)$ is obtained from the equation SDM12 $(\lambda)$ = a2 x (SD1 $(\lambda)$ - SDW1 $(\lambda)$ + b1 x (SD2 $(\lambda)$ - SDW1 $(\lambda)$)) + SDW1 $(\lambda)$ - c x a2 x (SD1 $(\lambda)$ - SDW1 $(\lambda)$)) x b1 x (SD2 $(\lambda)$ - SDW1 $(\lambda)$)).

In the first term, SD1 $(\lambda)$ is adjusted using a2. a2 x (SD1 $(\lambda)$ - SDW1 $(\lambda)$)) shows the spectral density of ink 1 by itself, which is obtained via ink 2. That is to say, by subtracting SDW1 $(\lambda)$ from SD1 $(\lambda)$, the spectral density of ink 1 from which from the SDW1 $(\lambda)$ of the printing paper has been excluded is obtained, and the spectral density of ink 1 which is obtained via ink 2 is obtained by multiplying the transparency ratio coefficient a2 as the transparency of ink 2. If the ink 2 is completely transparent, the transparency coefficient a2 is 1, while if it completely opaque, the transparency coefficient a2 is 0.

In the second term, SD2 $(\lambda)$ is adjusted by b1. b1 x (SD2 $(\lambda)$ - SDW1 $(\lambda)$)) shows the spectral density of ink 2 by itself when it is overprinted on ink 1. That is to say, by subtracting SDW1 from SD2 $(\lambda)$ the spectral density of ink 2 from by itself from which the spectral density SDW1 $(\lambda)$ of the printing paper has been excluded is obtained, and the spectral density of ink 2 by itself when ink 2 is overprinted on ink 1 is obtained by multiplying the set trapping ratio coefficient b1. Furthermore, as described above, the trapping ratio coefficient b is a constant that is between 0 and 1, and because it is a coefficient that is set to correspond with ink 1, the spectral density of the ink 2 by itself when it is overprinted also corresponds with ink 1. However, in the case where ink 1 is formed by overprinting plural inks, the trapping ratio coefficient b is the set trapping ratio for the uppermost ink layer, and thus the spectral density of the ink 2 by itself when overprinted corresponds to the uppermost ink layer.

Because the spectral density of the printing paper SDW1 ($\lambda$) is excluded in term 2, the spectral density SDW1 ($\lambda$) is added in the third term.

In the c x a2 x (SD1 ($\lambda$) - SDW1 ($\lambda$) x b1 x SD2 ($\lambda$) - SDW1 ($\lambda$) is the correction value for correction calculation. Because the spectral density obtained from the total of the three terms above is larger than the actually measured value, when the spectral density of ink 1 or the spectral density of ink 2 is a comparatively high value, the correction coefficient is multiplied by the product of a2 x (SD1 ($\lambda$) - SDW1 ($\lambda$)) and b1 x (SD2 ($\lambda$) - SDW1 ($\lambda$)) such that the correction is done by making the reducing value larger. In other words, the correction coefficient c is a value that is a proportion of the multiple of SD1 ($\lambda$) and SD2 ($\lambda$).

Also, the set coefficient values a, b, and c for each of the inks used herein are determined by measuring the spectral density SD of the plural overprinted colors in advance in order to minimize the difference between the estimated overprinted colors and the actual overprinted colors.

(S16)

The values of color systems such as the XYZ color system or the L*a*b* color system are obtained as described in the following from the estimated spectral densities of the color M12 obtained by overprinting ink 2 on ink 1. The process for obtaining the color system value from the spectral density is a generally known process and thus only the outline thereof is described.

First X, Y and Z from the XYZ color system values are obtained. The spectral reflectance RM12 ($\lambda$) for each wavelength is determined from the spectral density SDM12($\lambda$) using the formula RM12 ($\lambda$) =10^(-2 x SDM12 ($\lambda$) (a^b indicates "a" raised to the power of "b"), and X is obtained by totaling the values obtained when RM12 ($\lambda$) is multiplied by x ($\lambda$) for all the wavelengths (380nm to 730nm); Y is obtained by totaling the values obtained when RM12 ($\lambda$) is multiplied by y ($\lambda$) for all the wavelengths (380nm to 730nm); and Z is obtained by totaling the values obtained when RM12 ($\lambda$) is multiplied by z ($\lambda$) for all the wavelengths (380nm to 730nm). x ($\lambda$), y ($\lambda$) and z ($\lambda$) are obtained by multiplying the color coefficients x ($\lambda$), y ($\lambda$) and z ($\lambda$) of the CIE 1931 XYZ color system or the like which is set by the CIE (Commission Internationale de l'Eclairage: International Commission on Illumination) and the value of the D50 standard light source. (Note that there is a bar (-) on top of the x, y and z in CIE 1931.)

In addition, the L* value, the a* value and the b* value of the L*a*b* color system are obtained from the X, Y and Z values of the XYZ color system. First assume Xd=X/X0, Yd=Y/Y0, Zd=Z/Z0. Each of the X0, Y0 and Z0 respectively is a value which has been totaled for all the wavelengths (380 to 730 nm) for each of x ($\lambda$), y ($\lambda$) and z ($\lambda$). X2=Xd^(1/3); In the case where Xd>0.008856, = Xd x 7.787 + 16/116; In all other cases, Y2=Yd^(1/3); In the case where Yd>0.008856= Yd x 7.787 + 16/116; In all other cases Z2=Zd^(1/3); In the case where Zd>0.008856, = Zd x 7.787 + 16/116; In all other cases X2, Y2, Z2 are determined and L* = Y2 x 116 - 16, a* = 500 x (X2 - Y2) and b* = 200 x (Y2 - Z2).

(Color Adjustment Method for Color Proof Creation Apparatus)

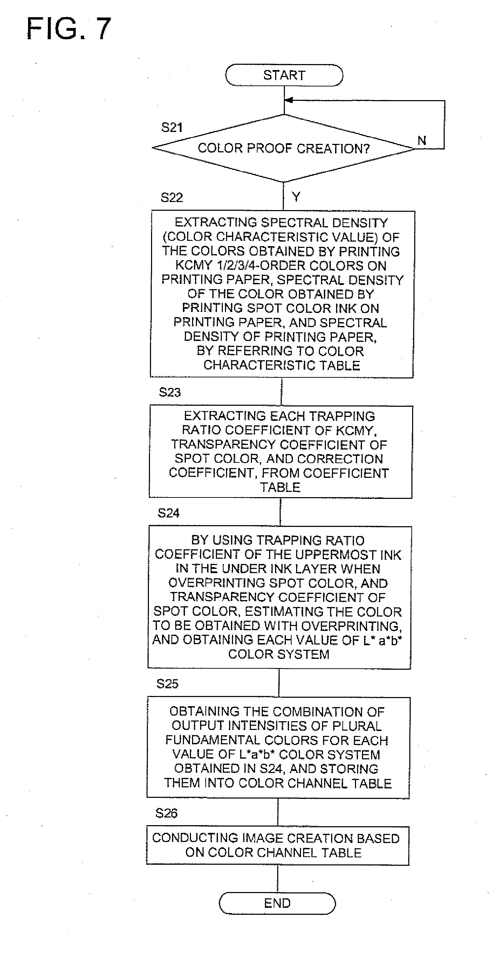

The steps for the processing of the color proof creation apparatus of this invention which uses the color adjusting method including the above color estimating method will be described using the flowchart shown in Fig. 7. The transparency coefficient a, the trapping coefficient b, and the correction coefficient c are stored in the coefficient table 23. Also, the CMYK1/2/3/4 multiple order colors printed using the inks of the colors C, M, Y, and K on the printing paper in the printing machine and the spectral density of the ground color of the printing paper, and the colors formed by printing spot colors on the printing paper are measured and stored in the color characteristics table 2.

(S21)

As shown in Fig. 7, instructions for color proof creation input by the operator using the input section 25 and an example is accepting instructions for color proof creation in the case where printing is done using the C, M, Y, K and spot color inks.

(S22)

Input of the instructions is accepted, and the color calculating section 21 refers to the color characteristics table 22, and the CMYK1/2/3/4 multiple-color (color 1) that is printed using each of the colors C, M, Y and K on printing paper at the printing machine, the spectral density SD1 of the ground color of printing paper (color W1), and the spectral density SD2 of the color from printing the spot color on printing paper are extracted. These spectral densities can be input from the input means 25 and accepted by the color calculation means 21.

(S23)

Furthermore, the color calculation means 21 extracts each trapping ratio coefficient b set for the inks of the colors C, M, Y and K, the transparency coefficient a set for the spot colors and the correction coefficient c by referring to the coefficient table 23.

(S24)

In addition, the color calculating section 21 also extracts each spectral density SDM12 in the case where printing is done by overprinting spot color on the CMYK1/2/3/4 multiple-colors on printing paper of the color C in the same manner as described above.

For example, in the case of overprinting spot color 1 on plain color which is a 1-order color C, because the ink which will be at the lower side is C, the spectral density SDM12 is calculated using the trapping ratio coefficient is "0.7" which is set for C in the coefficient table 23 of Fig. 3(a), and using the transparency coefficient "0.7" which is set for the spot color 1 in the coefficient table 23 of Fig. 3(a) because the ink which will be at the upper side is the spot color 1, and also using the correction coefficient 0.75 from Fig. 3(b).

Next, in the case of overprinting spot color 1 on a 2/3/4 multiple-color, if the case where spot color 1 is overprinted on B (C+M) is used as an example, SDM12 is calculated using the trapping ratio coefficient "0.9" which is set for M in the coefficient table 23 of Fig. 3(a) because the uppermost ink which will be at the lower side is M, and using the transparency coefficient "0.7" which is set for the spot color 1 in the coefficient table 23 of Fig. 3(a) because the ink which will be at the upper side is the spot color 1, and also using the correction coefficient 0.75 from Fig. 3(b).

Furthermore, the spectral densities from each of the spectral densities (SDM12) ($\lambda$) are converted and the value for the L*a*b* color system are obtained and stored in the color table 24.

(S25)

Next, the color channel calculating section 31 obtains output intensity combinations of plural fundamental colors for white ground, CMYK1/2/3/4 multiple-colors, spot color and the colors obtained by overprinting spot color on CMYK1/2/3/4 multiple-colors from the L*a*b* color system values stored in the color table 24 and the L*a*b* → CMY LUT from the referential table 32 and stores them in the color channel table 33.

(S26)

The control unit 1 refers to the color channel table 33 and controls the image recording section 4 such that the output intensity combination of plural plain colors is changed based on image data and the image recording section 4 forms images based on this control.

As described above, when color proof creation is done by reproducing a color, the target color being the color created by overprinting halftone dot images of inks of the colors C, M, Y and K on printing paper, by performing color estimation and color adjustment of color images in accordance with the transparency coefficient of the over printed ink, the trapping ratio coefficient of the ink at the lower side and the correction coefficient, high accuracy results can be obtained.

Furthermore, the above described color estimation or channel table creation may be performed using an information processing apparatus such as a PC (personal computer), and a color proof creation apparatus may retrieve the results of the color estimation or the color channel table via a medium such as a floppy (registered trademark) disk and the like, and this can be used in color image formation.

Also, in an image output system comprising an information processing apparatus such as a PC or the like and a color proof creation apparatus, the information processing apparatus such as the PC may have the function of color estimation or creating the color channel table described above and the color estimation results or the color channel table that has been created is retrieved by a color proof creation apparatus via an interface and may be used for forming color images.

[Embodiment]

Next, a specific example of performing estimation of the color obtained by printing as a result of overprinting ink using the color estimating method of the invention will be given. This example will be the case where spot color 2 (red) is overprinted on magenta.

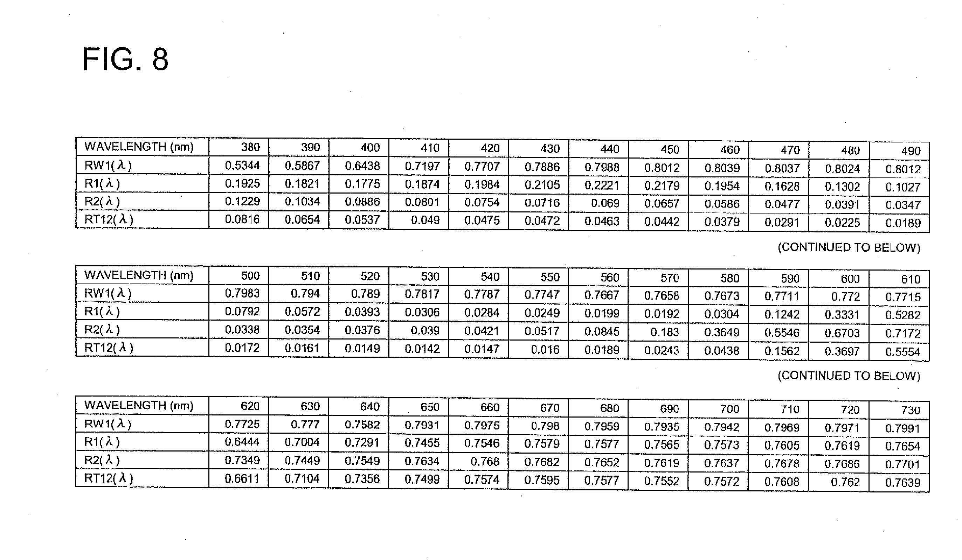

First, Fig. 8 shows the spectral reflection ratio RW1 ($\lambda$) of the ground color of the printing paper, the spectral reflection ratio R1 ($\lambda$) of magenta (M); and the spectral reflection ratio R2 ($\lambda$) of spot color 2 (red) which are the results of measuring spectral reflection (R). Actual printing is done on printing paper by overprinting spot color 2 (red) on magenta in order to compare the spectral densities described below of the color obtained by estimation and the color obtained by actual overprinting, and the results of the measurement are included as the spectral density ratio RT12 ($\lambda$). It is to be noted that Fig. 8 shows the results for wavelengths from 380 nm to 730 nm in 10 nm intervals.

Next, spectral density SD is obtained from the spectral reflection ratio R using the formula -0.5 x Log 10 (R), and the wavelengths for the spectral density SDW1 ($\lambda$) of the ground color of the printing paper, the spectral density SD1 ($\lambda$) of magenta (M) and the spectral density SD2 ($\lambda$) of spot color 2 (red). The spectral density SDM12 ($\lambda$) of the color obtained by overprinting spot color 2 (red) on magenta (M) are calculated using the formula SDM12 ($\lambda$) = a2 x (SD1 ($\lambda$) - SDW1 ($\lambda$)) + b1 x (SD2 ($\lambda$) - SDW1 ($\lambda$)) + SDW1 ($\lambda$) - c x a2 x (SD1 ($\lambda$) - SDW1 ($\lambda$)) x b1 x (SD2 ($\lambda$) - SDW1 ($\lambda$)) as well. At this time, the transparency coefficient a2 is 0.8 which is the transparency coefficient of the spot color 2 in Fig. 3(a), and the trapping ratio coefficient b1 is 0.9 which is the trapping coefficient of magenta (M) in Fig. 3(a) and the correction coefficient is 0.75 from Fig. 3(b).

In addition, the spectral density SDW1 ($\lambda$) of the ground color of the printing paper, the spectral den-

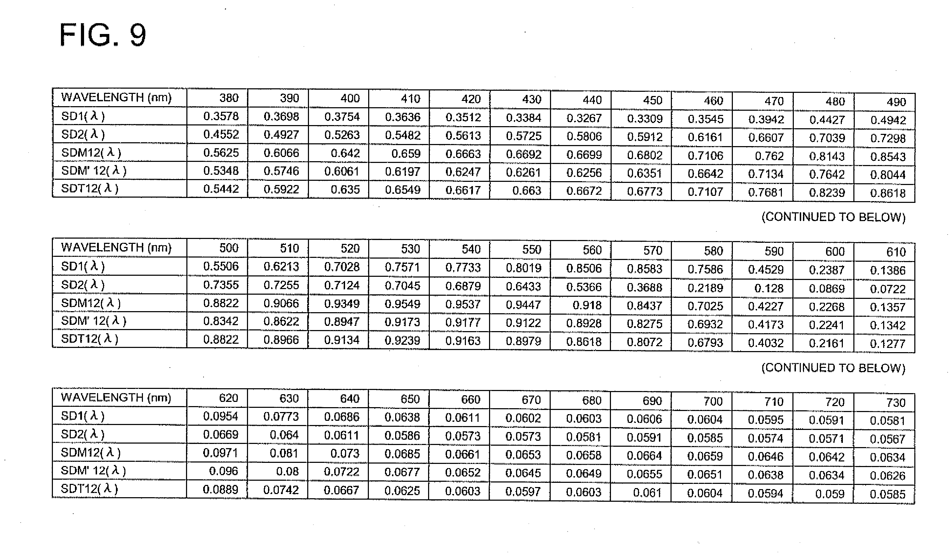

sity SD1 ($\lambda$) of magenta (M), the spectral density SD2 ($\lambda$) of spot color (red), and the spectral density SDM12 ($\lambda$) of the color obtained by overprinting spot color (red) on magenta (M) are shown in Fig. 9. Fig. 9 also shows the spectral density ratio ST12 ($\lambda$) which is obtained from RT12($\lambda$) for comparing the color obtained by estimation and the color obtained by actual overprinting. In addition Fig. 9 includes spectral densities calculated using the trapping ratio coefficient "0.8" which is set for yellow (Y) in place of the trapping ratio coefficient for magenta (M) and this is SDM'12 ($\lambda$), and the results of calculations for each wavelength for spectral density SDM'12 ($\lambda$) is included in order to clearly present the trapping ratio coefficient results.

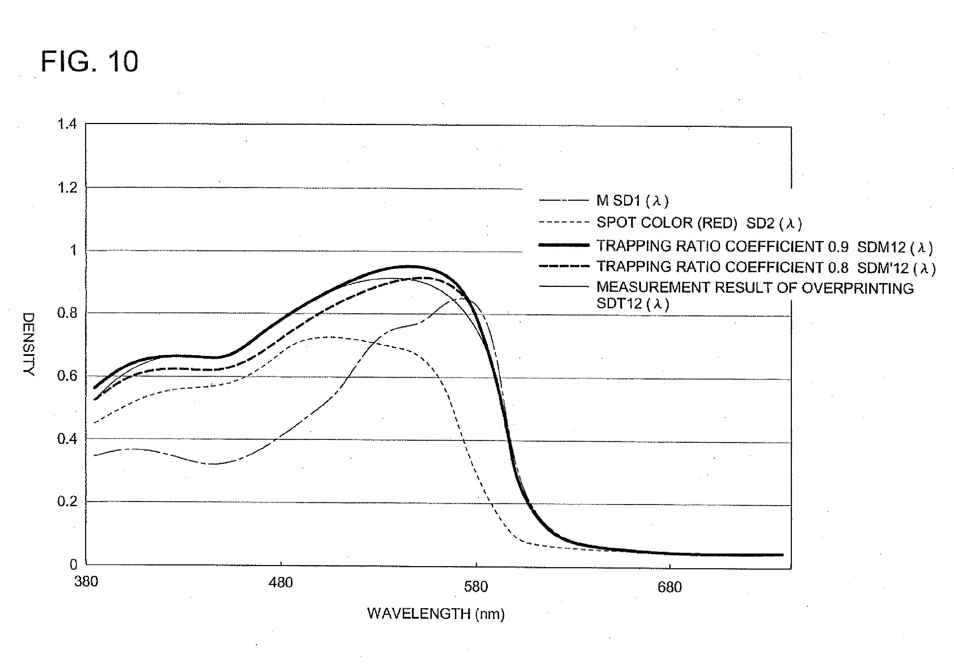

Furthermore, Fig. 10 shows each of the spectral density SD1 ($\lambda$) and SD2 ($\lambda$), and spectral density SDM12 ($\lambda$), as well as the spectral density SDT12 ($\lambda$) and SDM'12 ($\lambda$) on a graph. In Fig. 10, the graphs for spectral density SDM12 ($\lambda$), spectral density SDT12 ($\lambda$) and spectral density SDM'12 ($\lambda$) are substantially similar, but conversion into the color system values below and comparison is done based on the color system values.

The process for obtaining the color system value from the spectral density is a generally known process and thus only the outline of the case of spectral density SDM12 ($\lambda$) is described.

First X, Y and Z from the XYZ color system values are obtained. The spectral reflectance RM12 ($\lambda$) for each wavelength is determined from the spectral density SDM12 ($\lambda$) using the formula RM12 ($\lambda$) = $10^{(-2 \times SDM12(\lambda))}$ ($a^b$ indicates "a" raised to the power of "b"). X is obtained by totaling the values obtained when RM12 ($\lambda$) is multiplied by x ($\lambda$) for all the wavelengths (380nm to 730nm); Y is obtained by totaling the values obtained when RM12 ($\lambda$) is multiplied by y ($\lambda$) for all the wavelengths (380nm to 730nm); and Z is obtained by totaling the values obtained when RM12 ($\lambda$) is multiplied by z ($\lambda$) for all the wavelengths (380 nm to 730 nm). x ($\lambda$), y ($\lambda$) and z ($\lambda$) are obtained by multiplying the color coefficients x ($\lambda$), y ($\lambda$) and z ($\lambda$) of the CIE 1931 XYZ color system or the like which is set by the CIE (Commission Internationale de l'Eclairage: International Commission on Illumination) and the value of the D50 standard light source. (Note that there is a bar (-) on top of the x, y and z in CIE 1931.) In this manner, it is determined that (X, Y, Z) = (27.51916971, 13.61715009, 3.035570972).

In addition, the L* value, the a* value and the b* value of the L*a*b* color system are determined from the X, Y and Z values of the X, Y, Z color system. First, Xd, Yd, and Zd are obtained.

$$X2=Xd^{(1/3)};$$

in the case where Xd>0.008856,

$$X2= Xd \times 7.787 + 16/116;$$

in all other cases:

$$Y2=Yd^{(1/3)};$$

in the case where Yd>0.008856

$$Y2= Yd \times 7.787 + 16/116;$$

in all other cases:

$$Z2=Zd^{(1/3)};$$

in the case where Zd>0.008856,

$$Z2= Zd \times 7.787 + 16/116;$$

in all other cases:

In this way X2, Y2, Z2 are determined and L*, a*, b* are determined by:

$$L^* = Y2 \times 116 - 16$$

$$a^* = 500 \times (X2 - Y2)$$

$$b^* = 200 \times (Y2 - Z2).$$

As described above, the L* value, the a* value and the b* value are each determined from the spectral density SDM12 ($\lambda$) and SDT12 ($\lambda$) which was actually measured as LM*, aM*, and bM*, and LT*, aT*, and bT*, and (LM*, aM*, bM*) = (43.67999117, 71.96972009, 36.38036747) and (LT*, aT*, bT*) = (44.66544368, 72.09258997, 37.96175686). The color difference $\Delta E = ((LM^* - LT^*)^2 + (aM^* - aT^*)^2 + (bM^* - bT^*)^2)^{(1/2)} = 1.867352691$, and this is sufficiently small and thus it becomes clear that highly accurate color estimation is done.

Meanwhile, if L*a*b* color system values LM'*, aM'*, and bM'* are determined from the spectral sensitivity SDM'12 ($\lambda$) similarly, (LM'*, aM'*, bM'*) = (44.0897183, 71.64040825, 32.30001034), and if the color difference between the L*a*b* color system values is determined, $\Delta E = 5.708879196$, and it becomes evident that the color difference is smaller and the color estimation is more accurate when the trapping ratio coefficient set for magenta is used.

It is to be noted that in this embodiment, even when the trapping ratio coefficient b is determined by measuring the density due to different spectral characteristics of the L*a*b* color system values of ink 1, ink 2 and the printing paper and the spectral characteristics of the L*a*b* color system values such as that proposed in Patent Application No. 2003-292889 submitted by the applicants of this invention, and by using at least one of the L*a*b* color system values from the XYZ color system for overprinted colors, the trapping ratio coefficient b set for the ink which will be at the lower side can be used.

As is evident from the above description, this invention includes the following aspects of the embodiments.

(1) A color estimating method for estimating a color to be obtained by printing a first coloring material including a first pigment on a recording medium and by overprinting a second coloring material including a second pigment on top of the first coloring material printed on the recording medium, the color estimating method having the steps of: measuring a spectral density SD1 ($\lambda$) for each wavelength of light from the first coloring material printed on the recording medium; measuring a spectral density SD2 ($\lambda$) for each wavelength of light from the second coloring material printed on the recording medium; measuring a spectral density SDW1 ($\lambda$) for each wavelength of light from the recording medium; calculating with using the spectral density SD1 ($\lambda$) adjusted with a numeric value indicating transparency of the second coloring material, a spectral density SD2 ($\lambda$) adjusted with a numeric value indicating a trapping state of another coloring material on the first coloring material, and with using the spectral density SDW1 ($\lambda$); and estimating a spectral density SDM12 ($\lambda$) of the color obtained by overprinting the second coloring material on the first coloring material printed on the recording medium with using a result of the calculating step.

(2) The color estimating method of (1), wherein the calculating step further uses a value proportional to a product of the spectral density SD1 ($\lambda$) and the spectral density SD2 ($\lambda$).

(3) The color estimating method of (1), wherein the calculating step performs additions of a value obtained by adjusting a difference between the spectral density SD1 ($\lambda$) and the spectral density SDW1 ($\lambda$) with using the numeric value indicating the transparency of the second coloring material, a value obtained by adjusting a difference between the spectral density SD2 ($\lambda$) and the spectral density SDW1 ($\lambda$) with using the numeric value indicating the trapping state of another coloring material on the first coloring material, and the spectral density SDW1 ($\lambda$).

(4) The color estimating method of (3), wherein the calculating step further subtracts, from a result of the additions performed, a value proportional to a product of the difference between the spectral density SD1 ($\lambda$) and the spectral density SDW1 ($\lambda$) and the difference between the spectral density SD2 ($\lambda$) and the spectral density SDW1 ($\lambda$).

(5) The color estimating method of any one of (1) to (4), further including the step of converting the spectral density SDM12 ($\lambda$) estimated to a color system value.

(6) The color estimating method of any one of (1) to (5), wherein each of the first coloring material and the second coloring material comprises at least one of Y, M, C, K and spot color coloring materials.

(7) The color estimating method of any one of (1) to (6), wherein the first coloring material is formed by overprinting plural coloring materials, each of the plural coloring materials including a pigment, wherein the numeric value indicating a trapping state of another coloring material is a numeric value indicating a trapping state of a coloring material printed at an uppermost layer in the first coloring material.

(8) A color adjusting method for performing color adjustment with reproducing a target color by changing an output intensity of plural fundamental colors, the target color being a color of the halftone dot printing area to be obtained by overprinting, on a recording medium, a halftone dot image for each of the plural coloring materials each including a pigment, the color adjusting method including the steps of: storing a referential table representing a relationship between the output intensity of the plural fundamental colors and L*a*b* color system values; storing a numeric value table representing a numeric value indicating transparency of each of the plural coloring materials and a numeric value indicating trapping state on each of the plural coloring materials; extracting from the numeric table, a numeric value indicating trapping state of another coloring material on a first coloring material to be printed at a lower side in the overprinting, and a numeric value indicating transparency of a second coloring material to be printed at an upper side in the overprinting; and calculating with using a spectral density SD1 ($\lambda$) of each wavelength of light for the first coloring material printed on the recording medium, the spectral density SD1 ($\lambda$) being adjusted with the numeric value indicating the transparency of the second coloring material, a spectral density SD2 ($\lambda$) of each wavelength of light for the second coloring material printed on the recording medium, the spectral density SD2 ($\lambda$) being adjusted with the numeric value indicating the trapping state of another coloring material on the first coloring material, and with using the spectral density SDW1 ($\lambda$); estimating a spectral density SDM12 ($\lambda$) of the color to be obtained by overprinting the second coloring material on the first coloring material printed on the recording medium with using a result of the calculating step; converting the estimated spectral density SDM12 (λ) to L*a*b* color system values; and creating a color channel table by determining an output intensity combination of the plural fundamental colors for reproducing the target color by using L*a*b* color system values obtained by the converting step and the referential table; and performing the color adjustment by changing the output intensities for the plural fundamental colors based on the color channel table.

(9) The color adjusting method of (8), wherein the calculating step further uses a value proportional to a product of the spectral density SD1 (λ) and the spectral density SD2 (λ).

(10) The color adjusting method of (8), wherein the calculating step performs additions of a value obtained by adjusting a difference between the spectral density SD1 (λ) and the spectral density SDW1 (λ) with using the numeric value indicating the transparency of the second coloring material, a value obtained by adjusting a difference between the spectral density SD2 (λ) and the spectral density SDW1 (λ) with using the numeric value indicating the trapping state of another coloring material on the first coloring material, and the spectral density SDW1 (λ).

(11) The color adjusting method of (10), wherein the calculating step further subtracts, from a result of the additions performed, a value proportional to a product of the difference between the spectral density SD1 (λ) and the spectral density SDW1 (λ) and the difference between the spectral density SD2 (λ) and the spectral density SDW1 (λ).

(12) The color adjusting method of any one of (8) to (11), wherein each of the first coloring material and the second coloring material comprises at least one of Y, M, C, K and spot color coloring materials.

(13) The color adjusting method of any one of (8) to (12), wherein the first coloring material is formed by overprinting plural coloring materials, each of the plural coloring materials including a pigment, wherein the numeric value indicating a trapping state of another coloring material is a numeric value indicating a trapping state of a coloring material printed at an uppermost layer in the first coloring material.

(14) A color image forming apparatus for forming a color image with reproducing a target color by changing an output intensity of plural fundamental colors, the target color being a color of the halftone dot printing area to be obtained by overprinting, on a recording medium, a halftone dot image for each of the plural coloring materials each including a pigment, the color image forming apparatus including: a referential table representing a relationship between the output intensity of the plural fundamental colors and L*a*b* color system values; a numeric value table representing a numeric value indicating transparency of each of the plural coloring materials and a numeric value indicating trapping state on each of the plural coloring materials; a color calculating section for extracting from the numeric table, a numeric value indicating a trapping state of another coloring material on a first coloring material to be printed at a lower side in the overprinting, and a numeric value indicating transparency of a second coloring material to be printed at an upper side in the overprinting, and for calculating with using a spectral density SD1 (λ) of each wavelength of light for the first coloring material printed on the recording medium, the spectral density SD1 (λ) being adjusted with the numeric value indicating the transparency of the second coloring material, a spectral density SD2 (λ) of each wavelength of light for the second coloring material printed on the recording medium, the spectral density SD2 (λ) being adjusted with the numeric value indicating the trapping state of another coloring material on the first coloring material, and with using the spectral density SDW1 (λ), and for obtaining a spectral density SDM12 (λ) of the color to be obtained by overprinting the second coloring material on the first coloring material printed on the recording medium; a color channel creating unit for converting the obtained spectral density SDM12 (λ) to L*a*b* color system values, and for creating a color channel table by determining output intensity combination of the plural fundamental colors for reproducing the target color by using L*a*b* color system values obtained by the color conversion and the referential table; and a control unit for controlling to change the output intensities of the plural fundamental colors based on the color channel table to form the color image.

[Effect of the Invention]

According to the color estimating method described in (1) or (3), the color which is obtained by performing printing by overprinting can be estimated with high accuracy by adjusting the spectral density of the coloring material that will be at the lower side using the numeric value indicating transparency of the coloring material at the upper side, and adjusting the spectral density of the coloring material that will be at the upper side using the numeric value indicating trapping state of the coloring material at the lower side on the coloring material.

According to the color estimating method described in (2) or (4), the color which is obtained by performing printing by overprinting can be estimated with high accuracy by further correcting the spectral density of the color obtained by performing printing by overprinting at a wavelength indicating that the spectral density for the coloring material by itself that will be at the lower side or the coloring material by itself that will be at the upper side is relatively high.

According to the color estimating method described in (5), the color system values can be obtained from the spectral density obtained by estimation.

According to the color estimating method described in (6), the color which is obtained by performing printing by overprinting can be estimated with high accuracy even for Y, M, C, K and spot coloring materials.

According to the color estimating method described in (7), the color which is obtained performing printing by overprinting can be estimated with high accuracy even when the coloring material that will be at the lower side is one in which plural coloring materials are overprinted.

According to the color adjustment method described in (8) or (10), the color which is obtained by performing printing by overprinting can be estimated with high accuracy by adjusting the spectral density of the coloring material that will be at the lower side using a numeric value indicating transparency of the coloring material at the upper side, and adjusting the spectral density of the coloring material that will be at the upper side using a numeric value indicating trapping state of the coloring material at the lower side on a coloring material.

According to the color adjustment method described in (9) or (11), the color which is obtained by performing printing by overprinting can be estimated with high accuracy by further correcting the spectral density of the color obtained by performing printing by overprinting using a wavelength indicating that the spectral density for the coloring material by itself that will be at the lower side or the coloring material by itself that will be at the upper side is relatively high, and overprinting is done using the color of the plural fundamental colors with the estimated color as the target color.

According to the color adjustment method described in (12), even when the coloring material is a Y, M, C, K and spot color coloring material, the color obtained by printing and then overprinting can be estimated with high accuracy, and color adjustment can be performed such that reproduction is done using plural fundamental colors with the estimated color being the target color.

According to the color adjusting method described in (13), even when the coloring material that is to be at the lower side is one formed by overprinting plural coloring materials, the color obtained by performing printing by overprinting can be estimated with high accuracy and color adjustment can be performed such that reproduction is done using plural fundamental colors with the estimated color being the target color.

According to the color image creation apparatus described in (14), the color which is obtained by performing printing by overprinting can be estimated with high accuracy by adjusting the spectral density of the coloring material that will be at the lower side using the numeric value indicating transparency of the coloring material at the upper side, and adjusting the spectral density of the coloring material that will be at the upper side using the numeric value indicating trapping state of the coloring material at the lower side on a coloring material, and color adjustment can be performed such that reproduction is done using plural fundamental colors with the estimated color being the target color.

## Claims

1. A color estimating method for estimating a color to be obtained by printing a first coloring material including a first pigment on a recording medium and by overprinting a second coloring material including a second pigment on top of the first coloring material printed on the recording medium, the color estimating method comprising the steps of:

   measuring a spectral density $SD1(\lambda)$ for each wavelength of light from the first coloring material printed on the recording medium;
   measuring a spectral density $SD2(\lambda)$ for each wavelength of light from the second coloring material printed on the recording medium;
   measuring a spectral density $SDW1(\lambda)$ for each wavelength of light from the recording medium;
   calculating with using the spectral density $SD1(\lambda)$ adjusted with a numeric value indicating transparency of the second coloring material, a spectral density $SD2(\lambda)$ adjusted with a numeric value indicating a trapping state of another coloring material on the first coloring material, and with using the spectral density $SDW1(\lambda)$; and
   estimating a spectral density $SDM12(\lambda)$ of the color to be obtained by overprinting the second coloring material on the first coloring material printed on the recording medium with using a result of the calculating step.

2. The color estimating method of claim 1, wherein the calculating step further uses a value proportional to a product of the spectral density $SD1(\lambda)$ and the spectral density $SD2(\lambda)$.

3. The color estimating method of claim 1, wherein the calculating step performs additions of a value obtained by adjusting a difference between the spectral density $SD1(\lambda)$ and the spectral density $SDW1(\lambda)$ with using the numeric value indicating the transparency of the second coloring material, a value obtained by adjusting a difference between the spectral density $SD2(\lambda)$ and the spectral density $SDW1(\lambda)$ with using the numeric value indicating the trapping state of another coloring material on the first coloring material, and the spectral density $SDW1(\lambda)$.

**4.** The color estimating method of claim 3, wherein the calculating step further subtracts, from a result of the additions performed, a value proportional to a product of the difference between the spectral density SD1 ($\lambda$) and the spectral density SDW1 ($\lambda$) and the difference between the spectral density SD2 ($\lambda$) and the spectral density SDW1 ($\lambda$).

**5.** The color estimating method of any one of claims 1 to 4, further comprising the step of converting the spectral density SDM12 ($\lambda$) estimated to a color system value.

**6.** The color estimating method of any one of claims 1 to 5, wherein each of the first coloring material and the second coloring material comprises at least one of Y, M, C, K and spot color coloring materials.

**7.** The color estimating method of any one of claims 1 to 6, wherein the first coloring material is formed by overprinting plural coloring materials, each of the plural coloring materials including a pigment, wherein the numeric value indicating a trapping state of another coloring material is a numeric value indicating a trapping state of a coloring material printed at an uppermost layer in the first coloring material.

**8.** A color adjusting method for performing color adjustment with reproducing a target color by changing an output intensity of plural fundamental colors, the target color being a color of the halftone dot printing area to be obtained by overprinting, on a recording medium, a halftone dot image for each of the plural coloring materials each including a pigment, the color adjusting method comprising the steps of:

storing a referential table representing a relationship between the output intensity of the plural fundamental colors and L*a*b* color system values;
storing a numeric value table representing a numeric value indicating transparency of each of the plural coloring materials and a numeric value indicating trapping state on each of the plural coloring materials;
extracting from the numeric table, a numeric value indicating trapping state of another coloring material on a first coloring material to be printed at a lower side in the overprinting, and a numeric value indicating transparency of a second coloring material to be printed at an upper side in the overprinting; and
calculating with using a spectral density SD1 ($\lambda$) of each wavelength of light for the first coloring material printed on the recording medium, the spectral density SD1 ($\lambda$) being adjusted with the numeric value indicating the transparency of the second coloring material, a spectral density SD2 ($\lambda$) of each wavelength of light for the second coloring material printed on the recording medium, the spectral density SD2 ($\lambda$) being adjusted with the numeric value indicating the trapping state of another coloring material on the first coloring material, and with using the spectral density SDW1 ($\lambda$);
estimating a spectral density SDM12 ($\lambda$) of the color to be obtained by overprinting the second coloring material on the first coloring material printed on the recording medium with using a result of the calculating step;
converting the estimated spectral density SDM12 ($\lambda$) to L*a*b* color system values; and
creating a color channel table by determining an output intensity combination of the plural fundamental colors for reproducing the target color by using L*a*b* color system values obtained by the converting step and the referential table; and
performing the color adjustment by changing the output intensities for the plural fundamental colors based on the color channel table.

**9.** The color adjusting method of claim 8, wherein the calculating step further uses a value proportional to a product of the spectral density SD1 ($\lambda$) and the spectral density SD2 ($\lambda$).

**10.** The color adjusting method of claim 8, wherein the calculating step performs additions of a value obtained by adjusting a difference between the spectral density SD1 ($\lambda$) and the spectral density SDW1 ($\lambda$) with using the numeric value indicating the transparency of the second coloring material, a value obtained by adjusting a difference between the spectral density SD2 ($\lambda$) and the spectral density SDW1 ($\lambda$) with using the numeric value indicating the trapping state of another coloring material on the first coloring material, and the spectral density SDW1 ($\lambda$).

**11.** The color adjusting method of claim 10, wherein the calculating step further subtracts, from a result of the additions performed, a value proportional to a product of the difference between the spectral density SD1 ($\lambda$) and the spectral density SDW1 ($\lambda$) and the difference between the spectral density SD2 ($\lambda$) and the spectral density SDW1 ($\lambda$).

**12.** The color adjusting method of any one of claims 8 to 11, wherein each of the first coloring material and the second coloring material comprises at least one of Y, M, C, K and spot color coloring materials.

**13.** The color adjusting method of any one of claims 8 to 12, wherein the first coloring material is formed by overprinting plural coloring materials, each of the plural coloring materials including a pigment, wherein the numeric value indicating a trapping state of another coloring material is a numeric value indicating a trapping state of a coloring material printed at an uppermost layer in the first coloring material.

14. A color image forming apparatus for forming a color image with reproducing a target color by changing an output intensity of plural fundamental colors, the target color being a color of the halftone dot printing area to be obtained by overprinting, on a recording medium, a halftone dot image for each of the plural coloring materials each including a pigment, the color image forming apparatus comprising:

a referential table representing a relationship between the output intensity of the plural fundamental colors and L*a*b* color system values;
a numeric value table representing a numeric value indicating transparency of each of the plural coloring materials and a numeric value indicating trapping state on each of the plural coloring materials;
a color calculating section for extracting from the numeric table, a numeric value indicating a trapping state of another coloring material on a first coloring material to be printed at a lower side in the overprinting, and a numeric value indicating transparency of a second coloring material to be printed at an upper side in the overprinting, and for calculating with using a spectral density SD1 ($\lambda$) of each wavelength of light for the first coloring material printed on the recording medium, the spectral density SD1 ($\lambda$) being adjusted with the numeric value indicating the transparency of the second coloring material, a spectral density SD2 ($\lambda$) of each wavelength of light for the second coloring material printed on the recording medium, the spectral density SD2 ($\lambda$) being adjusted with the numeric value indicating the trapping state of another coloring material on the first coloring material, and with using the spectral density SDW1 ($\lambda$), and for obtaining a spectral density SDM12 ($\lambda$) of the color to be obtained by overprinting the second coloring material on the first coloring material printed on the recording medium;
a color channel creating unit for converting the obtained spectral density SDM12 ($\lambda$) to L*a*b* color system values, and for creating a color channel table by determining output intensity combination of the plural fundamental colors for reproducing the target color by using L*a*b* color system values obtained by the color conversion and the referential table; and
a control unit for controlling to change the output intensities of the plural fundamental colors based on the color channel table to form the color image.

# FIG. 1

RESULT OF SPOT
COLOR MEASUREMENT

```
                                              2
  ┌─────────────────────────────────────────────────────┐
  │              COLOR CALCULATION UNIT                   │
  │     ┌──────────┐                                      │
  │     │  INPUT   │── 25                                 │
  │     │ SECTION  │                                      │
  │     └──────────┘                                      │
  │          │                                            │
  │     ┌──────────┐         ┌──────────────┐             │
  │     │  COLOR   │         │    COLOR     │             │
  │     │CALCULATING│◄───────│CHARACTERISTIC│── 22        │
  │     │ SECTION  │         │    TABLE     │             │
  │     └──────────┘         └──────────────┘             │
  │                          ┌──────────────┐             │
  │                          │ COEFFICIENT  │── 23        │
  │                          │    TABLE     │             │
  │                          └──────────────┘             │
  │                          ┌──────────────┐             │
  │                          │ COLOR TABLE  │── 24        │
  │                          └──────────────┘             │
  └─────────────────────────────────────────────────────┘
```

```
  4              1
┌──────────┐  ┌──────────┐
│  IMAGE   │  │ CONTROL  │
│RECORDING │◄►│   UNIT   │
│   UNIT   │  │          │
└──────────┘  └──────────┘
```

```
                                              3
  ┌─────────────────────────────────────────────────────┐
  │           COLOR CHANNEL CREATING UNIT                 │
  │  ┌────────┐   ┌──────────┐    ┌──────────┐            │
  │  │ COLOR  │   │  COLOR   │    │REFERENTIAL│            │
  │  │CHANNEL │◄──│ CHANNEL  │◄───│  TABLE   │            │
  │  │ TABLE  │   │CALCULATING│    │          │            │
  │  │        │   │ SECTION  │    │          │            │
  │  └────────┘   └──────────┘    └──────────┘            │
  └─────────────────────────────────────────────────────┘
      33             31              32
```

# FIG. 2

| WAVELENGTH (nm) | 380 | 390 | 400 | 410 | ..... | 690 | 700 | 710 | 720 | 730 |
|---|---|---|---|---|---|---|---|---|---|---|
| W (WHITE) | | | | | | | | | | |
| C | | | | | | | | | | |
| M | | | | | | | | | | |
| Y | | | | | | | | | | |
| R(MY) | | | | | | | | | | |
| G(CY) | | | | | | | | | | |
| B(CM) | | | | | | | | | | |
| CMY | | | | | ..... | | | | | |
| K | | | | | | | | | | |
| KC | | | | | | | | | | |
| KM | | | | | | | | | | |
| KY | | | | | | | | | | |
| KR(KMY) | | | | | | | | | | |
| KG(KCY) | | | | | | | | | | |
| KB(KCM) | | | | | | | | | | |
| KCMY | | | | | | | | | | |

# FIG. 3 (a)

| KIND OF INK | TRANSPARENCY COEFFICIENT | TRAPPING RATIO COEFFICIENT |
|---|---|---|
| K | 0.6 | 0.8 |
| C | 0.7 | 0.7 |
| M | 0.6 | 0.9 |
| Y | 0.7 | 0.8 |
| SPOT COLOR 1 | 0.7 | 0.9 |
| SPOT COLOR 2 | 0.8 | 0.7 |

# FIG. 3 (b)

| CORRECTION COEFFICIENT | 0.75 |
|---|---|

# FIG. 4

24

| | L* | a* | b* |
|---|---|---|---|
| W (WHITE) | 82.86 | 2.62 | -4.35 |
| C | 56.24 | -21.23 | -37.04 |
| M | 50.95 | 50.29 | -5.72 |
| Y | 78.70 | -3.16 | 58.03 |
| R(MY) | 48.58 | 48.47 | 19.27 |
| G(CY) | 51.89 | -38.17 | 11.39 |
| B(CM) | 38.47 | 5.85 | -28.35 |
| CMY | 35.57 | -2.42 | -6.50 |
| K | 37.37 | 1.31 | 1.00 |
| KC | 32.25 | -2.42 | -4.55 |
| KM | 31.15 | 8.94 | 0.02 |
| KY | 34.20 | -1.01 | 6.67 |
| KR(KMY) | 28.83 | 6.62 | 2.43 |
| KG(KCY) | 29.80 | -4.50 | 0.67 |
| KB(KCM) | 28.71 | 3.11 | -3.49 |
| KCMY | 27.67 | 1.23 | -0.88 |
| SPOT COLOR | | | |
| C+SPOT COLOR | | | |
| M+SPOT COLOR | | | |
| Y+SPOT COLOR | | | |
| R(MY)+SPOT COLOR | | | |
| G(CY)+SPOT COLOR | | | |
| B(CM)+SPOT COLOR | | | |
| CMY+SPOT COLOR | | | |
| K+SPOT COLOR | | | |
| KC+SPOT COLOR | | | |
| KM+SPOT COLOR | | | |
| KY+SPOT COLOR | | | |
| KR(KMY)+SPOT COLOR | | | |
| KG(KCY)+SPOT COLOR | | | |
| KB(KCM)+SPOT COLOR | | | |
| KCMY+SPOT COLOR | | | |

# FIG. 5

33

| | Y | M | C |
|---|---|---|---|
| W (WHITE) | 11 | 17 | 17 |
| C | 8 | 22 | 95 |
| M | 23 | 103 | 20 |
| Y | 79 | 19 | 10 |
| R(MY) | 62 | 110 | 17 |
| G(CY) | 69 | 24 | 88 |
| B(CM) | 29 | 70 | 92 |
| CMY | 62 | 72 | 90 |
| K | 61 | 73 | 75 |
| KC | 68 | 75 | 94 |
| KM | 73 | 90 | 80 |
| KY | 81 | 74 | 82 |
| KR(KMY) | 82 | 92 | 88 |
| KG(KCY) | 80 | 86 | 100 |
| KB(KCM) | 74 | 88 | 96 |
| KCMY | 80 | 87 | 100 |
| SPOT COLOR | | | |
| C+SPOT COLOR | | | |
| M+SPOT COLOR | | | |
| Y+SPOT COLOR | | | |
| R(MY)+SPOT COLOR | | | |
| G(CY)+SPOT COLOR | | | |
| B(CM)+SPOT COLOR | | | |
| CMY+SPOT COLOR | | | |
| K+SPOT COLOR | | | |
| KC+SPOT COLOR | | | |
| KM+SPOT COLOR | | | |
| KY+SPOT COLOR | | | |
| KR(KMY)+SPOT COLOR | | | |
| KG(KCY)+SPOT COLOR | | | |
| KB(KCM)+SPOT COLOR | | | |
| KCMY+SPOT COLOR | | | |

# FIG. 6

```
                    ┌─────────────────┐
                    │      START      │
                    └─────────────────┘
                              │
   S11                        │
   ┌──────────────────────────────────────────┐
   │   MEASURING SPECTRAL DENSITY SD1          │
   │   ( λ ) OF COLOR 1, COLOR 1 BEING         │
   │   OBTAINED BY PRINTING WITH INK 1         │
   │         ON PRINTING PAPER                 │
   └──────────────────────────────────────────┘
                              │
   S12                        │
   ┌──────────────────────────────────────────┐
   │      MEASURING SPECTRAL DENSITY           │
   │   SD2 ( λ ) OF COLOR 2, COLOR 2 BEING     │
   │   OBTAINED BY PRINTING WITH INK 2         │
   │         ON PRINTING PAPER                 │
   └──────────────────────────────────────────┘
                              │
   S13                        │
   ┌──────────────────────────────────────────┐
   │   MEASURING SPECTRAL DENSITY SDW1         │
   │   ( λ ) OF GROUND COLOR OF PRINTING       │
   │              PAPER                        │
   └──────────────────────────────────────────┘
                              │
   S14                        │
   ┌──────────────────────────────────────────┐
   │       OBTAINING TRAPPING RATIO            │
   │          COEFFICIENT OF INK 1,            │
   │       TRANSPARENCY COEFFICIENT OF         │
   │   INK 2, AND CORRECTION COEFFICIENT       │
   └──────────────────────────────────────────┘
                              │
   S15                        │
   ┌──────────────────────────────────────────┐
   │      CALCULATING SPECTRAL DENSITY         │
   │             SDM12 ( λ )                   │
   └──────────────────────────────────────────┘
                              │
   S16                        │
   ┌──────────────────────────────────────────┐
   │     CALCULATING VALUES IN COLOR           │
   │   SYSTEM FROM SPECTRAL DENSITY            │
   │             SDM12 ( λ )                   │
   └──────────────────────────────────────────┘
                              │
                    ┌─────────────────┐
                    │       END       │
                    └─────────────────┘
```

# FIG. 7

```
              ┌─────────────┐
              │    START    │
              └──────┬──────┘
                     │  ◄──────────────────┐
   S21               ▼                     │
         ◄────────────────────────────►    │
          \      COLOR PROOF CREATION? /──N─┘
           ◄──────────────────────────►
                     │ Y
   S22               ▼
    ┌────────────────────────────────────┐
    │  EXTRACTING SPECTRAL DENSITY        │
    │  (COLOR CHARACTERISTIC VALUE) OF    │
    │  THE COLORS OBTAINED BY PRINTING    │
    │  KCMY 1/2/3/4-ORDER COLORS ON       │
    │  PRINTING PAPER, SPECTRAL DENSITY   │
    │  OF THE COLOR OBTAINED BY           │
    │  PRINTING SPOT COLOR INK ON         │
    │  PRINTING PAPER, AND SPECTRAL       │
    │  DENSITY OF PRINTING PAPER,         │
    │  BY REFERRING TO COLOR              │
    │  CHARACTERISTIC TABLE               │
    └────────────────┬───────────────────┘
   S23               │
    ┌────────────────▼───────────────────┐
    │  EXTRACTING EACH TRAPPING           │
    │  RATIO COEFFICIENT OF KCMY,         │
    │  TRANSPARENCY COEFFICIENT OF        │
    │  SPOT COLOR, AND CORRECTION         │
    │  COEFFICIENT, FROM COEFFICIENT      │
    │  TABLE                              │
    └────────────────┬───────────────────┘
   S24               │
    ┌────────────────▼───────────────────┐
    │  BY USING TRAPPING RATIO            │
    │  COEFFICIENT OF THE UPPERMOST INK   │
    │  IN THE UNDER INK LAYER WHEN        │
    │  OVERPRINTING SPOT COLOR, AND       │
    │  TRANSPARENCY COEFFICIENT OF        │
    │  SPOT COLOR, ESTIMATING THE COLOR   │
    │  TO BE OBTAINED WITH OVERPRINTING,  │
    │  AND OBTAINING EACH VALUE OF L* a*b*  │
    │  COLOR SYSTEM                       │
    └────────────────┬───────────────────┘
   S25               │
    ┌────────────────▼───────────────────┐
    │  OBTAINING THE COMBINATION OF       │
    │  OUTPUT INTENSITIES OF PLURAL       │
    │  FUNDAMENTAL COLORS FOR EACH        │
    │  VALUE OF L*a*b* COLOR SYSTEM       │
    │  OBTAINED IN S24, AND STORING       │
    │  THEM INTO COLOR CHANNEL TABLE      │
    └────────────────┬───────────────────┘
   S26               │
    ┌────────────────▼───────────────────┐
    │  CONDUCTING IMAGE CREATION BASED    │
    │  ON COLOR CHANNEL TABLE             │
    └────────────────┬───────────────────┘
                     ▼
              ┌─────────────┐
              │     END     │
              └─────────────┘
```

# FIG. 8

| WAVELENGTH (nm) | 380 | 390 | 400 | 410 | 420 | 430 | 440 | 450 | 460 | 470 | 480 | 490 |
|---|---|---|---|---|---|---|---|---|---|---|---|---|
| RW1($\lambda$) | 0.5344 | 0.5867 | 0.6438 | 0.7197 | 0.7707 | 0.7886 | 0.7988 | 0.8012 | 0.8039 | 0.8037 | 0.8024 | 0.8012 |
| R1($\lambda$) | 0.1925 | 0.1821 | 0.1775 | 0.1874 | 0.1984 | 0.2105 | 0.2221 | 0.2179 | 0.1954 | 0.1628 | 0.1302 | 0.1027 |
| R2($\lambda$) | 0.1229 | 0.1034 | 0.0886 | 0.0801 | 0.0754 | 0.0716 | 0.069 | 0.0657 | 0.0586 | 0.0477 | 0.0391 | 0.0347 |
| RT12($\lambda$) | 0.0816 | 0.0654 | 0.0537 | 0.049 | 0.0475 | 0.0472 | 0.0463 | 0.0442 | 0.0379 | 0.0291 | 0.0225 | 0.0189 |

(CONTINUED TO BELOW)

| WAVELENGTH (nm) | 500 | 510 | 520 | 530 | 540 | 550 | 560 | 570 | 580 | 590 | 600 | 610 |
|---|---|---|---|---|---|---|---|---|---|---|---|---|
| RW1($\lambda$) | 0.7983 | 0.794 | 0.789 | 0.7817 | 0.7787 | 0.7747 | 0.7667 | 0.7658 | 0.7673 | 0.7711 | 0.772 | 0.7715 |
| R1($\lambda$) | 0.0792 | 0.0572 | 0.0393 | 0.0306 | 0.0284 | 0.0249 | 0.0199 | 0.0192 | 0.0304 | 0.1242 | 0.3331 | 0.5282 |
| R2($\lambda$) | 0.0338 | 0.0354 | 0.0376 | 0.039 | 0.0421 | 0.0517 | 0.0845 | 0.183 | 0.3649 | 0.5546 | 0.6703 | 0.7172 |
| RT12($\lambda$) | 0.0172 | 0.0161 | 0.0149 | 0.0142 | 0.0147 | 0.016 | 0.0189 | 0.0243 | 0.0438 | 0.1562 | 0.3697 | 0.5554 |

(CONTINUED TO BELOW)

| WAVELENGTH (nm) | 620 | 630 | 640 | 650 | 660 | 670 | 680 | 690 | 700 | 710 | 720 | 730 |
|---|---|---|---|---|---|---|---|---|---|---|---|---|
| RW1($\lambda$) | 0.7725 | 0.777 | 0.7582 | 0.7931 | 0.7975 | 0.798 | 0.7959 | 0.7935 | 0.7942 | 0.7969 | 0.7971 | 0.7991 |
| R1($\lambda$) | 0.6444 | 0.7004 | 0.7291 | 0.7455 | 0.7546 | 0.7579 | 0.7577 | 0.7565 | 0.7573 | 0.7605 | 0.7619 | 0.7654 |
| R2($\lambda$) | 0.7349 | 0.7449 | 0.7549 | 0.7634 | 0.768 | 0.7682 | 0.7652 | 0.7619 | 0.7637 | 0.7678 | 0.7686 | 0.7701 |
| RT12($\lambda$) | 0.6611 | 0.7104 | 0.7356 | 0.7499 | 0.7574 | 0.7595 | 0.7577 | 0.7552 | 0.7572 | 0.7608 | 0.762 | 0.7639 |

# FIG. 9

| WAVELENGTH (nm) | 380 | 390 | 400 | 410 | 420 | 430 | 440 | 450 | 460 | 470 | 480 | 490 |
|---|---|---|---|---|---|---|---|---|---|---|---|---|
| SD1($\lambda$) | 0.3578 | 0.3698 | 0.3754 | 0.3636 | 0.3512 | 0.3384 | 0.3267 | 0.3309 | 0.3545 | 0.3942 | 0.4427 | 0.4942 |
| SD2($\lambda$) | 0.4552 | 0.4927 | 0.5263 | 0.5482 | 0.5613 | 0.5725 | 0.5806 | 0.5912 | 0.6161 | 0.6607 | 0.7039 | 0.7298 |
| SDM12($\lambda$) | 0.5625 | 0.6066 | 0.642 | 0.659 | 0.6663 | 0.6692 | 0.6699 | 0.6802 | 0.7106 | 0.762 | 0.8143 | 0.8543 |
| SDM'12($\lambda$) | 0.5348 | 0.5746 | 0.6061 | 0.6197 | 0.6247 | 0.6261 | 0.6256 | 0.6351 | 0.6642 | 0.7134 | 0.7642 | 0.8044 |
| SDT12($\lambda$) | 0.5442 | 0.5922 | 0.635 | 0.6549 | 0.6617 | 0.663 | 0.6672 | 0.6773 | 0.7107 | 0.7681 | 0.8239 | 0.8618 |

(CONTINUED TO BELOW)

| WAVELENGTH (nm) | 500 | 510 | 520 | 530 | 540 | 550 | 560 | 570 | 580 | 590 | 600 | 610 |
|---|---|---|---|---|---|---|---|---|---|---|---|---|
| SD1($\lambda$) | 0.5506 | 0.6213 | 0.7028 | 0.7571 | 0.7733 | 0.8019 | 0.8506 | 0.8583 | 0.7586 | 0.4529 | 0.2387 | 0.1386 |
| SD2($\lambda$) | 0.7355 | 0.7255 | 0.7124 | 0.7045 | 0.6879 | 0.6433 | 0.5366 | 0.3688 | 0.2189 | 0.128 | 0.0869 | 0.0722 |
| SDM12($\lambda$) | 0.8822 | 0.9066 | 0.9349 | 0.9549 | 0.9537 | 0.9447 | 0.918 | 0.8437 | 0.7025 | 0.4227 | 0.2268 | 0.1357 |
| SDM'12($\lambda$) | 0.8342 | 0.8622 | 0.8947 | 0.9173 | 0.9177 | 0.9122 | 0.8928 | 0.8275 | 0.6932 | 0.4173 | 0.2241 | 0.1342 |
| SDT12($\lambda$) | 0.8822 | 0.8966 | 0.9134 | 0.9239 | 0.9163 | 0.8979 | 0.8618 | 0.8072 | 0.6793 | 0.4032 | 0.2161 | 0.1277 |

(CONTINUED TO BELOW)

| WAVELENGTH (nm) | 620 | 630 | 640 | 650 | 660 | 670 | 680 | 690 | 700 | 710 | 720 | 730 |
|---|---|---|---|---|---|---|---|---|---|---|---|---|
| SD1($\lambda$) | 0.0954 | 0.0773 | 0.0686 | 0.0638 | 0.0611 | 0.0602 | 0.0603 | 0.0606 | 0.0604 | 0.0595 | 0.0591 | 0.0581 |
| SD2($\lambda$) | 0.0669 | 0.064 | 0.0611 | 0.0586 | 0.0573 | 0.0573 | 0.0581 | 0.0591 | 0.0585 | 0.0574 | 0.0571 | 0.0567 |
| SDM12($\lambda$) | 0.0971 | 0.081 | 0.073 | 0.0685 | 0.0661 | 0.0653 | 0.0658 | 0.0664 | 0.0659 | 0.0646 | 0.0642 | 0.0634 |
| SDM'12($\lambda$) | 0.096 | 0.08 | 0.0722 | 0.0677 | 0.0652 | 0.0645 | 0.0649 | 0.0655 | 0.0651 | 0.0638 | 0.0634 | 0.0626 |
| SDT12($\lambda$) | 0.0889 | 0.0742 | 0.0667 | 0.0625 | 0.0603 | 0.0597 | 0.0603 | 0.061 | 0.0604 | 0.0594 | 0.059 | 0.0585 |

EP 1 585 305 A2

FIG. 10

Legend:
M SD1 ($\lambda$)
SPOT COLOR (RED) SD2 ($\lambda$)
TRAPPING RATIO COEFFICIENT 0.9 SDM12 ($\lambda$)
TRAPPING RATIO COEFFICIENT 0.8 SDM'12 ($\lambda$)
MEASUREMENT RESULT OF OVERPRINTING SDT12 ($\lambda$)

Y-axis: DENSITY (1.4, 1.2, 1, 0.8, 0.6, 0.4, 0.2, 0)
X-axis: WAVELENGTH (nm) (380, 480, 580, 680)